# EUROPÄISCHE PATENTSCHRIFT

(11) **EP 0 608 554 B1**
(45) Veröffentlichungstag und Bekanntmachung des Hinweises auf die Patenterteilung: **27.08.1997**
(21) Anmeldenummer: 93120707.0
(22) Anmeldetag: 23.12.1993
(51) Int. Cl.: H01Q 1/12

(54) **Anschlusselement für eine Glasscheibe mit elektrischer Anordnung**
Connection element for window glass with electrical arrangement
Elément de connexion pour vitre avec dispositif électrique

(30) Priorität: 27.01.1993 DE 4302139
(43) Veröffentlichungstag der Anmeldung: 03.08.1994
(73) Patentinhaber: FLACHGLAS AKTIENGESELLSCHAFT, 90766 Fürth (DE)
(72) Erfinder: Braun, Jörg, D-48734 Reken (DE); Paulus, Peter, Dr., D-48167 Münster (DE); Tysper, Klaus, D-44135 Dortmund (DE)
(74) Vertreter: Niemann, Uwe, Dr.-Ing.

(56) Entgegenhaltungen:
- EP-A- 0 392 969
- EP-A- 0 418 047
- DE-A- 3 616 758
- FR-A- 2 608 844
- US-A- 5 005 020

## Beschreibung

Die Erfindung betrifft eine Glasscheibe aus Mehrscheibenglas, insbesondere aus Verbundglas, die mindestens eine Außenscheibe, eine Innenscheibe und ein die Scheiben miteinander verbindendes Verbundelement sowie ein Anschlußelement und eine zwischen den Scheiben befindliche elektrische Anordnung aufweist, wobei das Anschlußelement zumindest einen zumindest teilweise isolierten Metallfolienstreifen aufweist, dessen mit der elektrischen Anordnung verbindbarer Innenabschnitt sich zwischen die Innenscheibe und die Außenscheibe erstreckt und dessen Außenabschnitt mit der Außenseite der Innenscheibe verbindbar ist, wobei der Innenabschnitt und der Außenabschnitt einstückig ausgebildet sind. Die Erfindung bezieht sich insbesondere auf Glasscheiben für Fahrzeuge, ist jedoch auch bei Glasscheiben für andere Anwendungsbereiche einsetzbar.

Das Verbundelement ist bei Verbundglas, das bei Fahrzeugglasscheiben üblicherweise als Verbundsicherheitsglas ausgelegt ist, eine thermoplastische Kunststoffverbundfolie oder -schicht, wobei der Verbund eine Wärme- und Druckbehandlung des Laminats erzeugt wird. Das Verbundelement kann auch eine Gießharzschicht oder dergleichen sein. Auf Verbundglas bezieht sich die Erfindung in erster Linie. Die Erfindung ist jedoch auch bei Isolierglas anwendbar, bei dem das Verbundelement durch einen mit den voneinander beabstandet angeordneten Scheiben verklebten, in der Nähe des Scheibenrands angeordneten Abstandhalterrahmen gebildet wird, und bei dem sich die elektrische Anordnung im luft- oder gasgefüllten Scheibenzwischenraum befindet. Das Anschlußelement eignet sich insbesondere zur Anwendung bei Fahrzeugglasscheiben, bei denen die elektrische Anordnung ein drahtförmiges oder aufgedrucktes Antennenelement ist. Es ist jedoch auch einsetzbar für andere elektrische Anordnungen wie linienförmige Heizleiter, Heizschichten, Alarmdrähte, Sensoren und dergleichen.

Verbundglasscheiben mit zwischen den Scheiben befindlichen, insbesondere in die Verbundschicht eingelegten Antennenelementen sind in verschiedenen Ausführungen bekannt. In der Regel wird das Anschlußelement für die Antennenelemente auf der Außenseite der Innenscheibe angeordnet. Bei einer Glasscheibe der eingangs beschriebenen Gattung (EP-A-0 418 047) besitzt der Metallfolienstreifen des Anschlußelementes durchgehend gleiche Dicke. Sein den Rand der Verbundglasscheibe überragender Abschnitt wird über die Kanten der Innenscheibe gebogen und sein Außenabschnitt mit der Außenseite der Innenscheibe verbunden. Dabei verbleibt zwischen dem äußeren Rand der Innenscheibe und dem Metallfolienstreifen ein Abstand. Außen wird der Metallfolienstreifen mit einer Kunststoffdichtung abgedeckt, so daß der Rand der Verbundglasscheibe zumindest einen Vorsprung aufweist, der beim Hantieren mit der Verbundglasscheibe stört.

Bei einer anderen Ausführung (US-A-36 15 986) erfolgt die Verbindung des Anschlußelementes mit dem Antennenelement nach der Herstellung des Verbundes von Innenscheibe, Verbundschicht und Außenscheibe. Die Innenscheibe weist eine Randausnehmung auf, in die eine Anschlußfahne des Antennenelementes ragt. Diese Anschlußfahne wird mit dem Anschlußelement verlötet, und anschließend wird die Randausnehmung mit einer Isoliermasse gefüllt. Weil die Randausnehmung die Lötverbindungsstelle zwischen dem Antennenelement und dem Anschlußelement aufnimmt, kann die Verbundglasscheibe sowohl mit einer Einfassung aus einem gummielastischen Profilrahmen in die Karosserieöffnung eingesetzt als auch mittels eines Einbauklebers eingeklebt werden, ohne daß das Anschlußelement oder die Lötverbindungsstelle zum Antennenelement stören.

Das Verbinden des Antennenelementes mit dem Anschlußelement und die nachträgliche Versiegelung der Randausnehmung sind arbeitsaufwendig. Hinzu kommt, daß der Metallfolienstreifen des bekannten Anschlußelementes nur schmal und von geringer Steifigkeit ist, so daß die Haltekräfte an der Innenscheibe gering sind und die Gefahr besteht, daß der Metallfolienstreifen beim Hantieren mit der fertigen Verbundglasscheibe (Verpacken, Versand, Auspacken, Einbau) sich teilweise oder ganz von der Innenscheibe löst.

Bei einer anderen Ausführung (DE 34 02 518) ist das Anschlußelement ein Anschlußkabel, dessen Drahtlitze sich in eine Randausnehmung der Verbundschicht erstreckt und dort mit der Anschlußfahne des Antennenelementes verbunden ist. Auch in diesem Fall muß die Randausnehmung mit einer Isoliermasse gefüllt bzw. versiegelt werden. Mit einem derartigen Anschlußelement ist ein automatisches Aufbringen eines Dichtprofils oder eines Einbaukleberstrangs auf den Rand der Fahrzeugglasscheibe praktisch unmöglich.

Aufgabe der Erfindung ist es, eine Glasscheibe anzugeben, bei der die Verbindung des Anschlußelementes mit der elektrischen Anordnung schon vor dem Verbinden von Innenscheibe, Verbundelement und Außenscheibe sowie zwischen den Scheiben erfolgen kann, und wobei das Anschlußelement auch beim Manipulieren der fertigen Glasscheibe gegen Abreißen gesichert ist. Das Anschlußelement soll ohne Randausnehmung in der Innenscheibe und ohne nachträgliche Versiegelung von Verbindungsstellen verwendbar sein.

Diese Aufgabe wird dadurch gelöst, daß der mit der Außenseite der Innenscheibe verbindbare Außenabschnitt des Metallfolienstreifens einen Bereich mit einer größeren Dicke als derjenigen des Innenabschnitts aufweist.

Das Anschlußelement kann bereits vor dem Zusammenlegen der Einzelteile der Glasscheibe mit der elektrischen Anordnung verbunden werden. Dabei kann das mit der elektrischen Anordnung verbindbare Ende des Metallfolienstreifens eine Lötfläche aufweisen, mit der die elektrische Anordnung noch vor der Fertigstellung der Verbund- oder Isolierglasscheibe verbunden, insbesondere verlötet wird. Die Verbindungsstelle ist in der fertigen Glasscheibe sicher untergebracht und braucht nicht nachträglich isoliert zu werden.

Das Anschlußelement wird um den Rand der Innenscheibe herumgeführt. Dazu ist vorzugsweise zwischen dem Außenabschnitt und dem Innenabschnitt mindestens eine Knickstelle vorgesehen, die auf verschiedene Weise und zu verschiedenen Zeitpunkten erzeugt werden kann. Sie ermöglicht ein extrem enges Anliegen am Rand der Innenscheibe, wodurch die Gefahr des Abreißens oder Hängenbleibens beim Hantieren mit der Glasscheibe deutlich reduziert wird. Dabei weist der Metallfolienstreifen zwischen seinem Außenabschnitt und seinem Innenabschnitt als Knickstellen vorzugsweise mindestens eine dickenreduzierte Knicklinie und/oder eine Knickstufe auf. Als dickenreduzierte Knicklinie wird ein quer zur Längserstreckung des Metallfolienstreifens verlaufender linienförmiger Bereich verringerter Dicke verstanden. Knickstufe bezeichnet einen Dickenverlauf des Metallfolienstreifens, bei dem die Dicke vom Außenabschnitt zum Innenabschnitt stufenförmig abnimmt. Beide Maßnahmen ermöglichen in vorteilhafter Weise die Vorbereitung zum enganliegenden und maßgenauen Verformen des Anschlußelementes um die Kanten der Innenscheibe herum und tragen damit zur Verbesserung der Manipulationssicherheit der mit dem Anschlußelement versehenen Glasscheibe bei. Eine andere oder ergänzende Möglichkeit zur Bereitstellung von Knickstellen im Rahmen der Erfindung liegt darin, mindestens eine der Knickstellen als einen Bereich mit reduzierter Breite auszubilden.

Eine Randausnehmung in der Innenscheibe braucht beim Einsatz eines erfindungsgemäßen Anschlußelements nicht mehr vorgesehen zu werden. Der Bereich der Dickenvergrößerung des Metallfolienstreifens wird auf der Außenseite der Innenscheibe befestigt, vorzugsweise mit dieser verklebt. Dazu weist das Anschlußelement in diesem Bereich vorzugsweise eine Selbstklebeschicht auf. Die Dickenvergrößerung verbessert die Zugentlastung des Anschlußelementes, erleichtert das Hantieren mit dem Anschlußelement und bietet darüber hinaus die Möglichkeit für weitere Ausgestaltungen. Insbesondere kann der Metallfolienstreifen im Bereich der Dickenvergrößerung mindestens etwa die doppelte Dicke aufweisen wie in den übrigen Bereichen, nämlich vor allem im Bereich des zwischen die Scheiben reichenden Innenabschnitts des Anschlußelements.

Die Erfindung ermöglicht es, den Innenabschnitt des Anschlußelements ohne Einbußen bei der Manipulationssicherheit extrem dünn auslegen zu können. Dadurch wird vermieden, daß Dichtigkeits- oder Haftungsprobleme, wie sie beim Stand der Technik durch das Einbringen relativ dicker Anschlußelemente zwischen die Scheiben verursacht werden, entstehen. In der Praxis kann der Metallfolienstreifen im Bereich der Dickenvergrößerung beispielsweise eine Dicke von etwa 200 - 250 µm aufweisen, während seine Dicke im Bereich des Innenabschnitts nur etwa 100 - 125 µm oder weniger beträgt.

Der Metallfolienstreifen kann in seinem Außenabschnitt, insbesondere im Bereich der Dickenvergrößerung, zusätzlich eine Breitenvergrößerung aufweisen, wobei die Breite in diesem Bereich vorzugsweise ein Mehrfaches der Breite in den übrigen Bereichen beträgt. Diese Maßnahme erhöht die erreichbaren Haltekräfte beim Verkleben des Anschlußelementes mit der Außenseite der Innenscheibe. Sie erlaubt es darüber hinaus, den verbreiterten Bereich des Metallfolienstreifens leiterplattenartig auszubilden und mit aufgelöteten elektrischen Bauteilen zu versehen. Bei einer anderen Ausführung kann der verbreiterte Abschnitt des Metallfolienstreifens auch zur Bildung elektronischer Elemente und/oder Schaltkreise strukturiert sein. Eine solche integrierte Bauweise spart Platz und Kosten und ermöglicht beispielsweise die Anordnung von Schaltkreisen, insbesondere eines Verstärkers, nahe dem Fußpunkt eines die elektrische Anordnung bildenden Antennenelementes. Dadurch werden z.B. Leitungsverluste reduziert und Impedanzanpassungsprobleme vermieden.

An den Bereich der Dickenvergrößerung kann sich einstückig ein freies Ende anschließen, dessen Metallfolienstreifen mit einem Stecker oder einer Buchse verbindbar ist. Dieses freie Ende muß nicht mit der Innenscheibe verklebt werden. Alternativ oder ergänzend hierzu weist das Ende des Außenabschnitts eine verbreiterte und ggfs. verdickte Aufnahmefläche auf, auf der ein Stecker oder eine Buchse, insbesondere ein Druckknopfanschluß, in elektrisch leitender Verbindung befestigbar ist. Die Aufnahmefläche kann mit der Außenseite der Innenscheibe verklebt werden, wodurch ein sicheres und dauerhaftes Kontaktieren der mit dem Anschlußelement versehenen Glasscheibe nach deren Einbau ermöglicht wird.

In besonders bevorzugter Ausführung ist der gesamte Metallfolienstreifen einstückig, d.h. ohne Verbindungsstellen wie Löt- oder Schweißverbindungen, ausgebildet, wobei die Dicken- und/oder Breitenänderungen, die mindestens eine Knickstelle und ggfs. weitere Strukturen durch Abätzen und ggfs. Stanzen aus einem Metall-Halbzeugstreifen gebildet wurden. Verbindungsstellen sind stets störanfällig und bedingen einen erhöhten Herstellungsaufwand. Die Erfindung reduziert also die Störanfälligkeit und reduziert den Aufwand für das Herstellen und Anbringen des Anschlußelementes. Bei Anschlußelementen für Antennenelemente ist es besonderes wichtig, so wenige Verbindungsstellen wie möglich zu haben, da die Qualität des gesamten Antennensystems von der Qualität vorhandener Verbindungsstellen stark beeinflußt werden kann.

Zur Vermeidung von Beschädigungen des dünnen Metallfolienstreifens und von Kurzschlüssen mit elektrisch leitfähigen Teilen, wie z.B. der Karosserie von Fahrzeugen, ist der Metallfolienstreifen möglichst vollständig in eine Umhüllung aus reißfestem und wärmebeständigem Kunststoff, insbesondere aus innenseitig kleberbeschichtetem Polyimid, eingebettet. Die Wärmebeständigkeit ist wichtig, damit der Kunststoff die beim Herstellen einer Verbundglasscheibe und beim Löten auftretenden Temperaturen unbeschadet übersteht. Polyimid eignet sich aber auch zur Durchquerung des Klebers bei Isolierglasscheiben, bei denen die Gewährleistung von dauerhafter Dichtigkeit ein besonderes Problem darstellt. Beim Einbetten des vorgefertigten Metallfolienstreifens in die Kunststoffhülle ist durch eine geeignete Prozeßführung dafür Sorge zu tragen, daß keine Lufteinschlüsse gebildet werden, da ansonsten Probleme bei der Weiterverarbeitung der mit dem Anschlußelement versehenen Glasscheibe, insbesondere beim Verbundprozeß, auftreten können.

Es versteht sich, daß das Anschlußelement auch mehrere, nebeneinander oder in mehreren Ebenen verlaufende Metallfolienstreifen aufweisen kann, z.B. zum Anschluß an mehrere elektrische Anordnungen wie Antennenelemente und/oder zur Bildung von Schaltkreisen oder Verstärkern.

Die Erfindung erlaubt insbesondere die Bereitstellung einer Fahrzeugglasscheibe mit einem Antennenelement, bei der der Metallfolienstreifen des erfindungsgemäßen Anschlußelements und das Antennenelement selbst als einstückiges Bauteil ausgeführt sind. In diesem Fall wird die gesamte Anordnung aus Antennenleiter(n) und Anschlußelement vorgefertigt, wobei der Metallfolienstreifen nahtlos in den/die Antennenleiter übergeht. Um das Einlegen der gesamten Anordnung zwischen die Scheiben zu erleichtern, werden der Metallfolienstreifen und der/die Antennenleiter abgesehen von eventuellen Lötflächen vollständig in eine Umhüllung aus Kunststoff eingebettet. Dabei wird die Umhüllung der Antenne vorzugsweise aus durchsichtigem oder durchscheinendem Kunststoff gefertigt, um die Durchsicht durch die Glasscheibe so wenig wie möglich zu beeinträchtigen.

Im folgenden werden in der Zeichnung dargestellte Ausführungsbeispiele der Erfindung erläutert; es zeigen:
- Fig. 1: eine Draufsicht auf ein erfindungsgemäßes Anschlußelement,
- Fig. 2: einen Schnitt in Richtung II-II durch das Anschlußelement gemäß Fig. 1,
- Fig. 3: einen Schnitt durch eine Verbundglasscheibe mit Antennenelement und Anschlußelement,
- Fig. 4: eine andere Ausführung des Gegenstandes nach Fig. 1,
- Fig. 5: eine Variante des Gegenstandes nach Fig. 4,
- Fig. 6: einen Schnitt in Richtung VI-VI durch den Gegenstand nach Fig. 5.
- Fig. 7: eine weitere Variante des Gegenstandes nach Fig. 4,
- Fig. 8: einen Schnitt in Richtung VIII-VIII durch den Gegenstand nach Fig. 7.

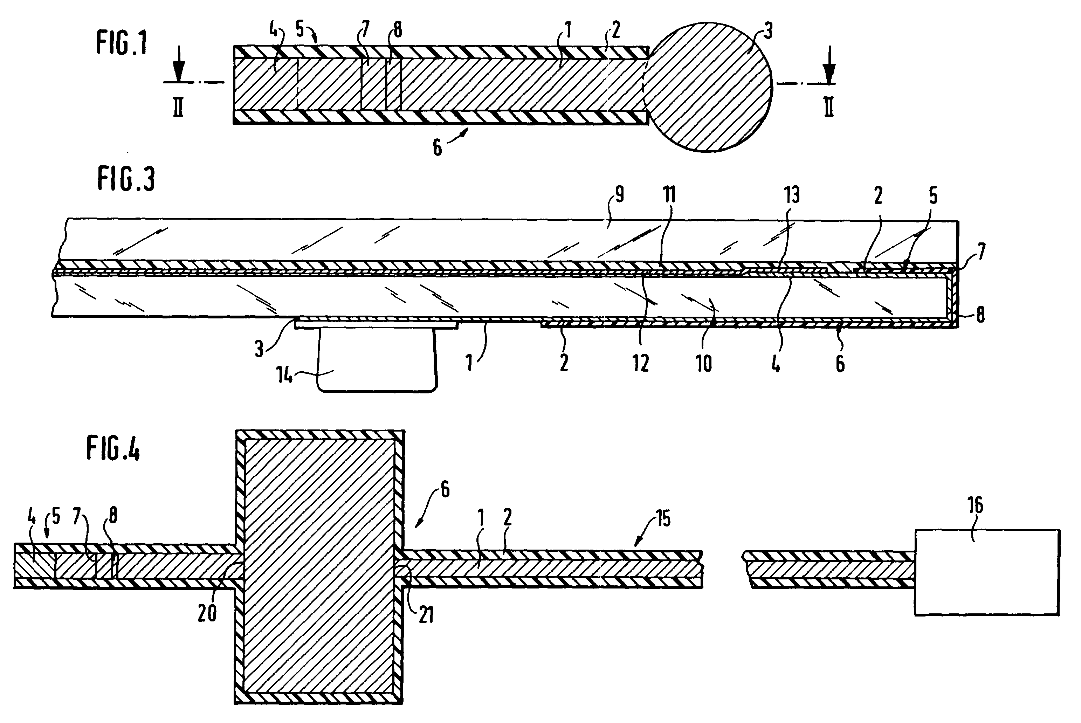

Das in den Figuren 1 und 2 dargestellte Anschlußelement für eine Fahrzeugglasscheibe besteht aus einem Metallfolienstreifen 1 aus Kupfer, der nahezu vollständig und luftblasenfrei in eine Kunststoffumhüllung 2 aus zwei innenseitig kleberbeschichteten Polyimid-Folien eingebettet ist. Der Metallfolienstreifen 1 besitzt bis auf eine kunststofffreie Aufnahmefläche 3 für einen Stecker oder eine Buchse, insbesondere einen Druckknopfanschluß , durchgehend die gleiche Breite. An dem der Aufnahmefläche 3 gegenüberliegenden Ende ist der Metallfolienstreifen 1 einseitig freigelegt und weist dort eine Lötfläche 4 auf. Die Lötfläche 4 ist wie die Aufnahmefläche 3 vorzugsweise verzinnt. Der aus der Lötfläche 4 und einem kurzen daran anschließenden Abschnitt gebildete Innenabschnitt 5 des Metallfolienstreifens 1 besitzt eine Dicke von etwa 125 µm. Der an den Innenabschnitt 5 anschließende Außenabschnitt 6 des Metallfolienstreifens 1 einschließlich der Aufnahmefläche 3 besitzt eine Dicke von etwa 250 µm. Zwischen dem Innenabschnitt 5 und dem Außenabschnitt 6 befinden sich zwei zueinander parallele Knickstellen 7, 8. Es handelt sich dabei um eine sich quer über den Metallfolienstreifen 1 erstreckende Knicklinie 8 sowie eine näher zum Innenabschnitt 5 angeordnete Knickstufe 7.

In der Querschnittsdarstellung der Figur 2 ist der erfindungsgemäße Dickenverlauf des Metallfolienstreifens 1 deutlich zu erkennen. Dieser weist im Bereich des Innenabschnitts 5 die geringste Dicke auf. Im Bereich der Knickstufe 7 nimmt seine Dicke auf etwa das Doppelte zu. Im Bereich der Knicklinie 8 ist seine Dicke linienförmig reduziert. Im Anschluß daran bleibt sie über den gesamten Außenabschnitt 6 bis zur Aufnahmefläche 3 konstant.

Die Anordnung des Anschlußelementes an einer Verbundglasscheibe ist in Fig. 3 dargestellt. Zu der Verbundglasscheibe gehören eine Außenscheibe 9, eine Innenscheibe 10 und eine Verbundschicht 11 mit einem darin eingebetteten, die elektrische Anordnung bildenden Antennenelement 12. Das mit dem Ende 13 des Antennenelements 12 verbindbare Ende des Metallfolienstreifens 1, nämlich der Innenabschnitt 5 mit der Lötfläche 4, erstreckt sich zwischen die Innenscheibe 10 und die Außenscheibe 9, wobei die Lötfläche 4 mit dem Ende 13 des Antennenelementes 12 verbunden ist. Im einzelnen ist die Anordnung so, daß die beiden Knickstellen 7, 8, deren Abstand der Dicke der Innenscheibe 10 entspricht, an den Kanten der Innenscheibe 10 anliegen, so daß der Metallfolienstreifen 1 eng um den Rand der Innenscheibe 10 herumgeführt ist. Der Außenabschnitt 6 des Metallfolienstreifens 1 ist im Bereich der Dickenvergrößerung auf die Außenseite der Innenscheibe 10 aufgeklebt. Seine Aufnahmefläche 3 trägt einen Druckknopf 14 für den späteren Anschluß einer weiterführenden Leitung.

Das Anschlußelement wird bereits vor dem Zusammenlegen der Bauteile der Verbundglasscheibe mit dem Ende 13 des Antennenelementes 12 z.B. durch Löten verbunden und in der beschriebenen Weise an der Innenscheibe 10 befestigt, so daß weder beim weiteren Herstellungsprozeß der Verbundglasscheibe noch beim späteren Hantieren mit der Verbundglasscheibe, insbesondere auch nicht beim Einbau der Verbundglasscheibe in eine Öffnung der Fahrzeugkarosserie, die Gefahr besteht, daß das Anschlußelement von der Verbundglasscheibe ganz oder teilweise abgelöst wird.

Bei den in den Fig. 4 bis 8 dargestellten Ausführungsformen bezeichnen gleiche Bezugszeichen gleiche Teile. Bei dem in Fig. 4 dargestellten Anschlußelement weist der Metallfolienstreifen 1 des Außenabschnitts 6 bereichsweise eine Breite auf, die ein Mehrfaches der Breite des übrigen Metallfolienstreifens 1 beträgt. Dadurch wird insbesondere die Haftung des Außenabschnittes 6 und damit des Anschlußelementes auf der Außenseite der Innenscheibe 10 verbessert, so daß sich hieran auch ein längeres, gegebenenfalls nicht mit der Innenscheibe 10 verbundenes freies Ende 15 anschließen kann, das an seinem Ende einen Stecker / eine Buchse 16 oder dergleichen trägt. Bei der in Fig. 4 dargestellten Ausführung besitzt der Metallfolienstreifen 1 im Bereich dieses freien Endes 15 wiederum entsprechend dem Innenabschnitt 5 eine Dicke von etwa 125 µm. Der verbreiterte Bereich des Außenabschnitts 6 ist dicker als alle anderen Abschnitte des Anschlußelements. Dickenänderungen treten zusätzlich zu den Knickstellen 7, 8 im Bereich der Stufen 21 und gegebenenfalls 20 auf.

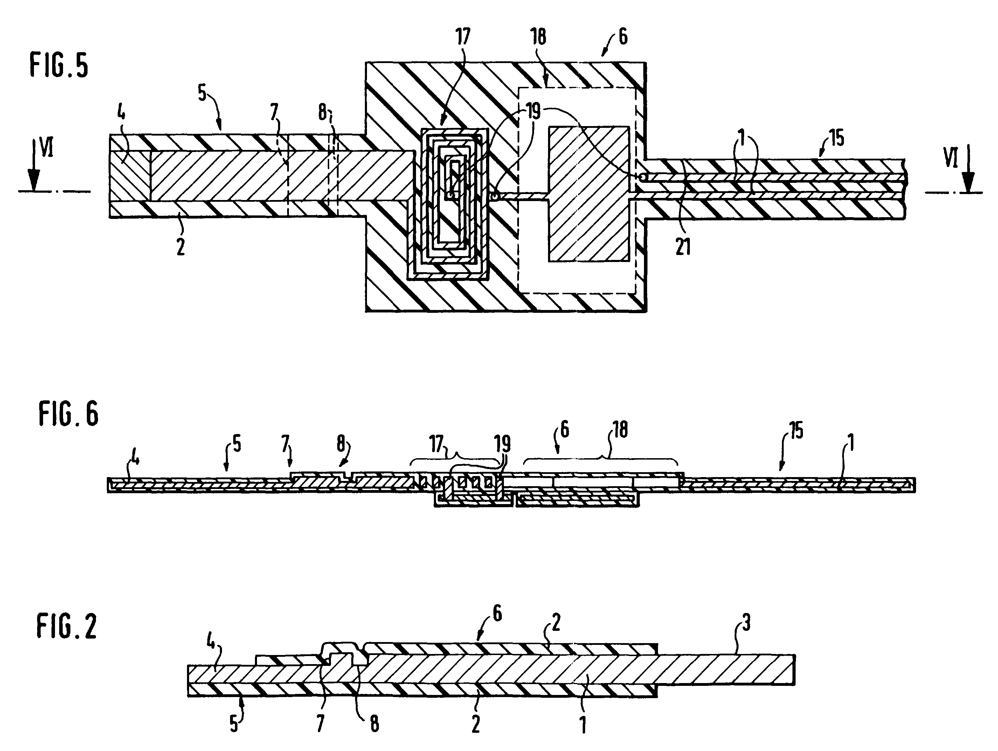

Das in den Figuren 5 und 6 dargestellte Anschlußelement für eine Antenne besitzt einen ähnlichen Grundriß wie das in Fig. 4 dargestellte. Auf dem verbreiterten und gegenüber dem Innenabschnitt 5 dickeren Bereich des Außenabschnitts 6 sind elektronische Elemente, bei der dargestellten Ausführung eine Spule 17 und eine Kapazität 18, ausgebildet. Im daran anschließenden freien Ende 15 befinden sich zwei Metallfolienstreifen 1, von denen einer als Antennenanschluß und der andere als Masseanschluß dient.

Wie man der lediglich eine Prinzipskizze darstellenden Zeichnung entnimmt, ist insbesondere der verbreiterte und verdickte Bereich des Außenabschnitts 6 des Metallfolienstreifens 1 leiterplattenartig ausgebildet und mit den dargestellten oder weiteren elektronischen Bauelementen ausgerüstet. Der Metallfolienstreifen 1 ist, wie insbesondere Fig. 6 erkennen läßt, in zwei Ebenen angeordnet, zwischen denen sich eine isolierende Schicht, z.B. aus Polyimid befindet. Die in den verschiedenen Ebenen angeordneten strukturierten Metallfolienstreifen 1 sind an mehreren Stellen 19 elektrisch leitend miteinander verbunden. Die Dicken- und Breitenänderungen des Metallfolienstreifens 1, die Knickstellen 7, 8 und die elektronischen Strukturen wurden bevorzugt durch Abätzen und Stanzen eines Kupfer-Halbzeugstreifens konstanter Dicke hergestellt. Unabhängig davon oder zusätzlich können auf den verdickten und verbreiterten Bereich des Außenabschnitts 6 des Metallfolienstreifens 1 auch elektronische Bauteile aufgelötet werden, so daß vollständige Schaltkreise oder Verstärker gebildet sind, die dicht am Fußpunkt des Antennenelementes 12 angeordnet sind.

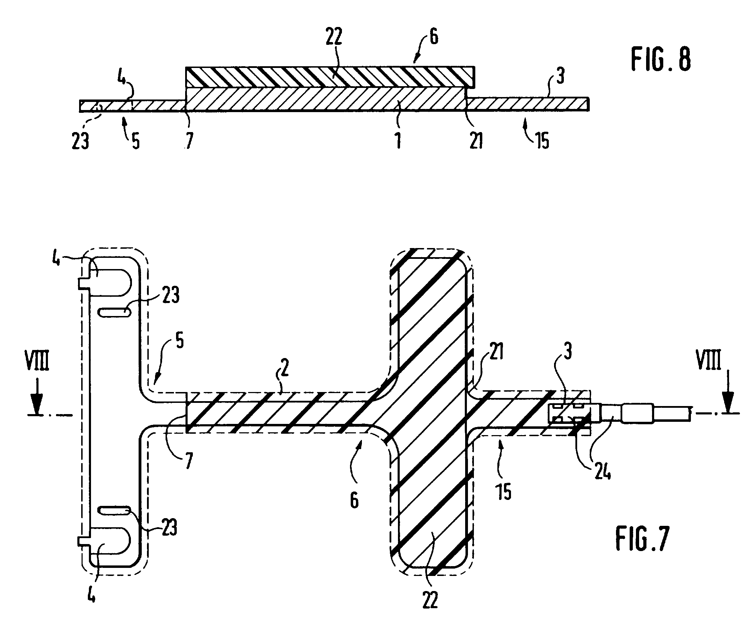

In den Figuren 7 und 8 ist eine weitere Ausführungsform des erfindungsgemäßen Anschlußelements dargestellt. Der Metallfolienstreifen 1 weist einen gegenüber dem Innenabschnitt 5 dickeren Bereich des Außenabschnitts 6 auf, der darüber hinaus teilweise um ein Mehrfaches der ursprünglichen Breite verbreitert ist. Der Bereich der Dickenvergrößerung ist dadurch in der Draufsicht T-förmig ausgebildet, wie in Fig. 7 zu erkennen ist. Zwischen dem Innenabschnitt 5 und dem Außenabschnitt 6 befindet sich eine Knickstufe 7, die ein enges Anliegen des Anschlußelements am Rand der Innenscheibe 10 ermöglicht. Eine weitere Stufe 21 befindet sich am anderen Ende des Bereichs der Dickenvergrößerung. Die nur in Figur 7 dargestellte isolierende Umhüllung 2 aus Polyimid ist auf der zur Außenseite der Innenscheibe 10 gewandten Seite mit einer schraffiert dargestellten Selbstklebeschicht 22 versehen, über die der Außenabschnitt 6 an der Innenscheibe 10 befestigt werden kann. Das Anschlußelement weist ein vollständig isoliertes freies Ende 15 auf, an das ein Anschlußkabel mittels eines Verbindungselements 24 angecrimpt ist.

Zur Kontaktierung einer aus zwei parallelen Drähten bestehenden AM-Antenne ist der Innenabschnitt 5 des Anschlußelements T-förmig gestaltet. Das verbreiterte Ende des Innenabschnitts 5 weist zwei freigelegte Lötflächen 4 auf, mit denen die Antennendrähte verbunden werden. Zur Reduzierung der Wärmebelastung des Innenabschnitts 5 beim Anlöten der Antennendrähte wurden in dessen verbreitertes Ende neben den Lötflächen 4 Aussparungen 23 in den Metallfolienstreifen 1 geätzt, die den Wärmetransport behindern sollen. Im dargestellten Ausführungsbeispiel beträgt die Dicke des Metallfolienstreifens im Bereich des Innenabschnitts 5 sowie des freien Endes 15 etwa 100 µm, während der Bereich der Dickenvergrößerung des Außenabschnitts 6 etwa 250 µm dick ist.

## Patentansprüche

1. Glasscheibe aus Mehrscheibenglas, insbesondere aus Verbundglas, die mindestens eine Außenscheibe (9), eine Innenscheibe (10) und ein die Scheiben miteinander verbindendes Verbundelement (11) sowie ein Anschlußelement und eine zwischen den Scheiben befindliche elektrische Anordnung (12) aufweist, wobei das Anschlußelement zumindest einen zumindest teilweise isolierten Metallfolienstreifen (1) aufweist, dessen mit der elektrischen Anordnung (12) verbindbare Innenabschnitt (5) sich zwischen die Innenscheibe (10) und die Außenscheibe (9) erstreckt und dessen Außenabschnitt (6) mit der Außenseite der Innenscheibe (10) verbindbar ist, wobei der Innenabschnitt (5) und der Außenabschnitt (6) einstückig ausgebildet sind, **dadurch gekennzeichnet**, daß der mit der Außenseite der Innenscheibe (10) verbindbare Außenabschnitt (6) des Metallfolienstreifens (1) einen Bereich mit einer größeren Dicke als derjenigen des Innenabschnitts (5) aufweist.

2. Glasscheibe nach Anspruch 1, **dadurch gekennzeichnet**, daß zwischen dem Außenabschnitt (6) und dem Innenabschnitt (5) mindestens eine Knickstelle (7, 8) vorgesehen ist.

3. Glasscheibe nach Anspruch 2, **dadurch gekennzeichnet**, daß der Metallfolienstreifen (1) eine als Knickstufe (7) ausgebildete Knickstelle aufweist.

4. Glasscheibe nach Anspruch 2, **dadurch gekennzeichnet**, daß der Metallfolienstreifen (1) eine als dickenreduzierte Knicklinie (8) ausgebildete Knickstelle aufweist.

5. Glasscheibe nach einem der Ansprüche 2 - 4, **dadurch gekennzeichnet** , daß der Metallfolienstreifen (1) eine Knickstelle (7, 8) als Bereich mit reduzierter Breite aufweist.

6. Glasscheibe nach einem der vorangehenden Ansprüche, **dadurch gekennzeichnet**, daß das mit der elektrischen Anordnung (12) verbindbare Ende des Innenabschnitts (5) des Metallfolienstreifens (1) mindestens eine Lötfläche (4) aufweist.

7. Glasscheibe nach einem der vorangehenden Ansprüche, **dadurch gekennzeichnet**, daß der Metallfolienstreifen (1) im Bereich der Dickenvergrößerung mindestens die doppelte Dicke aufweist wie im Bereich des Innenabschnitts (5).

8. Glasscheibe nach einem der vorangehenden Ansprüche, **dadurch gekennzeichnet**, daß der Außenabschnitt (6) des Metallfolienstreifens (1) zusätzlich eine Breitenvergrößerung gegenüber dem Innenabschnitt (5), vorzugsweise im Bereich der Dickenvergrößerung, aufweist.

9. Glasscheibe nach einem der vorangehenden Ansprüche, **dadurch gekennzeichnet**, daß der Bereich der Dickenvergrößerung des Metallfolienstreifens (1) leiterplattenartig ausgebildet und mit aufgelöteten elektronischen Bauteilen versehen ist.

10. Glasscheibe nach einem der vorangehenden Ansprüche, **dadurch gekennzeichnet**, daß der Außenabschnitt (6) des Metallfolienstreifens (1) zur Bildung elektronischer Bauelemente (17, 18) und/oder Schaltkreise strukturiert ist.

11. Glasscheibe nach einem der vorangehenden Ansprüche, **dadurch gekennzeichnet**, daß sich an den Bereich der Dickenvergrößerung des Metallfolienstreifens (1) einstückig ein freies Ende (15) anschließt, das mit einem Stecker oder mit einer Buchse (16) verbindbar ist.

12. Glasscheibe nach einem der Ansprüche 1 bis 10, **dadurch gekennzeichnet**, daß das Ende des Außenabschnitts (6) des Metallfolienstreifens (1) eine verbreiterte Aufnahmefläche (3) aufweist, auf der ein Stecker oder eine Buchse, insbesondere ein Druckknopfanschluß (14), in elektrisch leitender Verbindung befestigbar ist.

13. Glasscheibe nach Anspruch 2, **dadurch gekennzeichnet**, daß der gesamte Metallfolienstreifen (1) einstückig ausgebildet ist, wobei die Dicken- und/oder Breitenänderungen, die Knickstelle(n) (7, 8) und ggf. weitere Strukturen (17, 18) durch Abätzen und ggf. Stanzen aus einem Metall-Halbzeugstreifen gebildet wurden.

14. Glasscheibe nach einem der vorangehenden Ansprüche, **dadurch gekennzeichnet**, daß der gesamte Metallfolienstreifen (1) abgesehen von freiliegenden Lötflächen (3, 4) vollständig in eine Umhüllung (2) aus einem innenseitig kleberbeschichteten reißfesten und wärmebeständigen Kunststoff wie Polyimid eingebettet ist.

15. Glasscheibe nach einem der vorangehenden Ansprüche, **dadurch gekennzeichnet**, daß mehrere Metallfolienstreifen (1) nebeneinander oder - durch isolierende Zwischenlagen getrennt - in verschiedenen Ebenen vorgesehen sind.

16. Glasscheibe nach einem der vorangehenden Ansprüche, bei der die elektrische Anordnung (12) ein Antennenelement (12) bildet, **dadurch gekennzeichnet**, daß der Metallfolienstreifen (1) und das Antennenelement (12) als einstückiges Bauteil ausgeführt sind.

## Claims

1. Glass pane of multi-pane glass, in particular of laminated glass, which comprises at least an outer pane (9), an inner pane (10) and a laminating element (11) connecting the panes to one another, as well as a connecting element and an electrical arrangement (12) which is located between the panes, wherein the connecting element comprises at least one metal foil strip (1) which is at least partly insulated, the inner section (5) of which is connectible with the electrical arrangement (12) and extends between the inner pane (10) and the outer pane (9), and the outer section (6) of which is bondable to the outside of the inner pane (10), wherein the inner section (5) and the outer section (6) are formed as one piece, characterised in that the outer section (6), which is connectible with the outer side of the inner pane (10), of the metal foil strip (1) has a region with a greater thickness than that of the inner section (5).

2. Glass pane according to claim 1, characterised in that at least one fold location (7, 8) is provided between the outer section (6) and the inner section (5).

3. Glass pane according to claim 2, characterised in that the metal foil strip (1) has a fold location in the form of a fold step (7).

4. Glass pane according to claim 2, characterised in that the metal foil strip (1) has a fold location in the form of a thickness-reduced line of fold (8).

5. Glass pane according to one of claims 2 to 4, characterised thereby that the metal foil strip (1) has a fold location (7, 8) in the form of a region of reduced width.

6. Glass pane according to one of the preceding claims, characterised in that the end of the inner section (5), which is connectible with the electrical arrangement (12), of the metal foil strip (1) has at least one soldering surface (4).

7. Glass pane according to one of the preceding claims, characterised in that the metal foil strip (1) in the region of increased thickness has at least twice the thickness as in the region of the inner section (5).

8. Glass pane according to one of the preceding claims, characterised in that the outer section (6) of the metal foil strip (1) additionally has an increase in width in relation to the inner section (5), preferably in the region of increased thickness.

9. Glass pane according to one of the preceding claims, characterised in that the region of increased thickness of the metal foil strip (1) is formed in the manner of a printed circuitboard and is provided with soldered-on electronic components.

10. Glass pane according to one of the preceding claims, characterised in that the outer section (6) of the metal foil strip (1) is structured for the formation of electronic components (17, 18) and/or circuits.

11. Glass pane according to one of the preceding claims, characterised in that a free end (15), which is connectible with a plug or with a socket (16), is integrally connected to the region of increased thickness of the metal foil strip (1).

12. Glass pane according to one of claims 1 to 10, characterised in that the end of the outer section (6) of the metal foil strip (1) has a widened receiving surface (3) on which is fixable in electrically conductive connection a plug or socket, in particular a press-stud connection (14).

13. Glass pane according to claim 2, characterised in that the entire metal foil strip (1) is formed in one piece, wherein the changes in thickness and/or width, the fold location(s) (7, 8) and - if any - the other structures (17, 18) are formed by etching and, where necessary, stamping from a metal semi-finished strip.

14. Glass pane according to one of the preceding claims, characterised in that the entire metal foil strip (1), apart from the exposed soldering surfaces (3, 4), is completely embedded in a sheath (2) consisting of a tear-resistant and heat-resistant plastics material, such as polyimide, coated on the inside with adhesive.

15. Glass pane according to one of the preceding claims, characterised in that several metal foil strips (1) are provided adjacent to one another or - separated by insulating interlayers - in different planes.

16. Glass pane according to one of the preceding claims, in which the electrical arrangement (12) forms an antenna element, characterised in that the metal foil strip (1) and the antenna element (12) are constructed as a one-piece component.

## Revendications

1. Vitre en verre à plusieurs panneaux, notamment en du verre composite, comprenant au moins un panneau extérieur (9), un panneau intérieur (10) et un élément composite (Il) reliant les panneaux l'un à l'autre, ainsi qu'un élément de raccordement et un dispositif électrique (12) situé entre les panneaux, l'élément de raccordement présentant au moins une bande (1) en feuille métallique au moins partiellement isolée et dont le segment intérieur (5), pouvant être raccordé au dispositif électrique (12), s'étend entre le panneau intérieur (10) et le panneau extérieur (9), et dont le segment extérieur (6) peut être relié à la face externe du panneau intérieur (10), le segment intérieur (5) et le segment extérieur (6) étant réalisés d'un seul tenant, caractérisée par le fait que le segment extérieur (6) de la bande (1) en feuille métallique, pouvant être relié à la face externe du panneau intérieur (10), présente une région d'épaisseur supérieure à celle du segment intérieur (5).

2. Vitre selon la revendication 1, caractérisée par le fait qu'au moins une zone coudée (7, 8) est prévue entre le segment extérieur (6) et le segment intérieur (5).

3. Vitre selon la revendication 2, caractérisée par le fait que la bande (1) en feuille métallique comporte une zone coudée réalisée sous la forme d'un gradin coudé (7).

4. Vitre selon la revendication 2, caractérisée par le fait que la bande (1) en feuille métallique comporte une zone coudée réalisée sous la forme d'une ligne coudée (8) d'épaisseur réduite.

5. Vitre selon l'une des revendications 2-4, caractérisée par le fait que la bande (1) en feuille métallique comporte une zone coudée (7, 8) se présentant comme une région de largeur réduite.

6. Vitre selon l'une des revendications précédentes, caractérisée par le fait que l'extrémité du segment intérieur (5) de la bande (1) en feuille métallique, pouvant être raccordée au dispositif électrique (12), comporte au moins une surface brasée (4).

7. Vitre selon l'une des revendications précédentes, caractérisée par le fait que la bande (1) en feuille métallique possède, dans la région de l'accroissement d'épaisseur, une épaisseur représentant au moins le double de celle de la région du segment intérieur (5).

8. Vitre selon l'une des revendications précédentes, caractérisée par le fait que le segment extérieur (6) de la bande (1) en feuille métallique comporte additionnellement un accroissement de largeur par rapport au segment intérieur (5), de préférence dans la région de l'accroissement d'épaisseur.

9. Vitre selon l'une des revendications précédentes, caractérisée par le fait que la région de l'accroissement d'épaisseur de la bande (1) en feuille métallique est réalisée à la manière d'une plaquette à circuits imprimés, et est munie de composants électroniques rapportés par brasage.

10. Vitre selon l'une des revendications précédentes, caractérisée par le fait que le segment extérieur (6) de la bande (1) en feuille métallique est structuré en vue de former des composants électroniques (17, 18) et/ou des circuits de commutation.

11. Vitre selon l'une des revendications précédentes, caractérisée par le fait qu'une extrémité libre (15), se rattachant d'un seul tenant à la région de l'accroissement d'épaisseur de la bande (1) en feuille métallique, peut être raccordée à une fiche ou à une douille (16).

12. Vitre selon l'une des revendications 1 à 10, caractérisée par le fait que l'extrémité du segment extérieur (6) de la bande (1) en feuille métallique comporte une surface réceptrice élargie (3) sur laquelle une fiche ou une douille, notamment une connexion (14) à bouton-poussoir, peut être fixée avec liaison électriquement conductrice.

13. Vitre selon la revendication 2, caractérisée par le fait que la bande (1) en feuille métallique est intégralement réalisée d'un seul tenant, les variations d'épaisseur et/ou de largeur, la ou les zone(s) coudée(s) (7, 8) et, le cas échéant, d'autres structures (17, 18) ayant été formées par attaque à l'acide et, éventuellement, par poinçonnage dans une bande métallique semi-finie.

14. Vitre selon l'une des revendications précédentes, caractérisée par le fait que la bande (1) en feuille métallique est intégralement noyée, abstraction faite de surfaces brasées exposées (3, 4), dans un enrobage (2) en une matière plastique thermiquement stable, résistant à la rupture et revêtue d'un adhésif à sa face interne, telle qu'un polyimide.

15. Vitre selon l'une des revendications précédentes, caractérisée par le fait que plusieurs bandes (1) en feuille métallique sont prévues en juxtaposition ou dans des plans différents - en étant séparées par des couches intercalaires isolantes -.

16. Vitre selon l'une des revendications précédentes, dans laquelle le dispositif électrique (12) forme un élément d'antenne (12), caractérisée par le fait que la bande (1) en feuille métallique et l'élément d'antenne (12) sont réalisés sous la forme d'une pièce constitutive monobloc.
